# FASCICULE DE BREVET EUROPEEN

(11) **EP 2 917 628 B1**
(45) Date de publication et mention de la délivrance du brevet: **14.12.2016**
(21) Numéro de dépôt: 13783957.7
(22) Date de dépôt: 31.10.2013
(51) Int. Cl.: F16L 59/153, F16L 59/14, F16L 1/24

(54) **CONDUITE FLEXIBLE DE TRANSPORT D'UN FLUIDE CRYOGÉNIQUE, INSTALLATION ET PROCÉDÉ ASSOCIÉS**
SCHLAUCH ZUM TRANSPORTIEREN EINER KRYOGENEN FLÜSSIGKEIT UND ZUGEHÖRIGE EINRICHTUNG UND VERFAHREN
FLEXIBLE PIPE FOR TRANSPORTING A CRYOGENIC FLUID, AND ASSOCIATED INSTALLATION AND METHOD

(30) Priorité: 08.11.2012 FR 1203003
(43) Date de publication de la demande: 16.09.2015
(73) Titulaire: Technip France, 92400 Courbevoie (FR)
(72) Inventeur: ESPINASSE, Philippe, 76420 Bihorel (FR)
(74) Mandataire: Lavoix
(86) Numéro de dépôt international: PCT/EP2013/072796
(87) Numéro de publication internationale: WO 2014/072222

(56) Documents cités:
- WO-A1-2011/092440
- US-B2- 7 543 613

## Description

La présente invention concerne une conduite flexible de transport d'un fluide cryogénique selon le préambule de la revendication 1.

Une telle conduite est destinée à transporter un fluide cryogénique issu par exemple d'un procédé de liquéfaction de gaz. Le fluide transporté est notamment du gaz naturel liquéfié présentant une température d'ébullition inférieure à -163 °C.

Plus généralement, un fluide cryogénique transporté par la conduite présente une température d'ébullition inférieure à 0°C.

Le gaz naturel extrait du sol constitue une source importante de combustible pouvant être valorisé.

Pour transporter le gaz naturel sous forme gazeuse depuis son lieu de production vers son lieu d'exploitation, il est connu d'utiliser des pipelines. Toutefois, dans de nombreux cas, notamment lorsque le lieu de production est situé dans une étendue d'eau, il est plus simple et plus économique de transporter le gaz naturel sous forme liquide, afin de diminuer son volume pendant le transport et de faciliter son stockage et sa manipulation.

Toutefois, la manipulation de fluides cryogéniques, et notamment le déchargement du fluide cryogénique depuis une usine de liquéfaction embarquée vers un navire de transport, ou depuis un navire de transport vers une installation de stockage à terre doit être effectué au voisinage du littoral, souvent par le moyen de bras articulés de connexion raccordant le navire à l'usine ou à l'installation de stockage.

De tels bras articulés ne sont pas adaptés dans le cas où les opérations de chargement ou de déchargement sont effectuées loin de la côte, dans des zones peu protégées, notamment lorsque les unités de liquéfaction sont situées sur des installations flottantes du type « FLNG » .

Dans ce cas, le déchargement du gaz liquéfié ne peut être effectué que lorsque les conditions météorologiques sont calmes, ce qui peut rendre l'exploitation difficile.

En outre, les conduites flexibles de type liée ou non liée connues pour le déchargement de fluides hydrocarbonés à température ambiante ne sont pas aptes à transporter des fluides cryogéniques à des températures inférieures à -40°C/-50°C, compte tenu des températures très basses des fluides cryogéniques et de leurs propriétés particulières.

Pour pallier ce problème, la demande WO 2011/092440 de la Demanderesse propose une conduite flexible qui est particulièrement adaptée pour transporter du fluide à travers un volume d'air. En effet, compte tenu des couches d'isolant thermique disposées dans cette conduite, celle-ci est flottante.

Par suite, cette conduite n'est pas adaptée en l'état pour le transfert de fluide cryogénique sous le niveau de la mer.

A cet égard, US 7 543 613 divulgue une installation de transfert de fluide entre deux navires comprenant une conduite flexible déployée en caténaire sous la surface de l'eau, afin de limiter l'impact des conditions climatiques sur le système de transfert de fluide et améliorer la sécurité des opérations.

Pour obtenir une telle configuration en caténaire, la conduite est alourdie par un ensemble de lest. Toutefois, ce document ne donne aucune indication quant à la structure de cet ensemble. En particulier, l'ensemble de lest doit être capable d'alourdir la conduite, sans endommager l'isolation thermique et les propriétés mécaniques de celle-ci.

Un but de l'invention est donc d'obtenir une conduite de transport d'un fluide cryogénique à travers une étendue d'eau, qui peut être alourdie localement de manière fiable, sans nuire à ses propriétés mécaniques et à son intégrité de structure.

A cet effet, l'invention a pour objet une conduite selon la revendication 1.

La conduite selon l'invention peut comprendre l'une ou plusieurs des caractéristiques des revendications 2 à 9, prise(s) isolément ou suivant toute combinaison technique possible.

L'invention a également pour objet une installation de transfert de fluide cryogénique selon la revendication 10.

L'installation selon l'invention peut comprendre la caractéristique de la revendication 11.

L'invention a également pour objet un procédé de fabrication d'une conduite flexible selon la revendication 12.

L'invention sera mieux comprise à la lecture de la description qui va suivre, donnée uniquement à titre d'exemple, et faite en se référant aux dessins annexés, sur lesquels :
- la figure 1 est une vue schématique en coupe partielle d'une première installation de transfert de fluide cryogénique comportant une première conduite flexible selon l'invention ;
- la figure 2 est une vue schématique, prise en coupe suivant un plan axial médian des principales couches de la première conduite flexible selon l'invention ;
- la figure 3 est une vue schématique, prise en coupe suivant un plan transversal, de la conduite flexible de la figure 2 ;
- la figure 4 est une vue en perspective de trois-quarts faces d'une variante d'anneau de lest destiné à la conduite de la figure 2 ;
- la figure 5 est une vue de dessus de l'anneau de la figure 4 ;
- la figure 6 est une vue de côté de l'anneau de la figure 4 ;
- la figure 7 est une vue analogue à la figure 2 d'une deuxième conduite selon l'invention ; et
- la figure 8 est une vue en perspective partiellement éclatée de la conduite de la figure 7.

Dans tout ce qui suit, les termes « amont » et « aval » s'entendent généralement par rapport au sens normal de circulation d'un fluide à travers un élément. Les termes « intérieur » et « extérieur » s'entendent généralement par rapport à un axe central d'un élément.

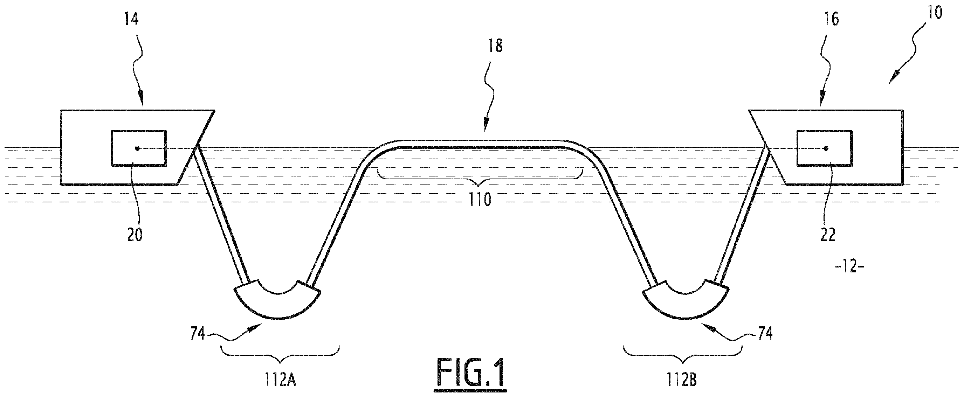

La figure 1 illustre schématiquement une première installation 10 de transfert de fluide cryogénique à travers une étendue d'eau 12.

L'installation 10 comporte un premier ensemble amont 14 de réception de fluide cryogénique, un deuxième ensemble aval 16 de réception de fluide cryogénique, et une première conduite 18 de transfert du fluide cryogénique à travers l'étendue d'eau 12.

Le fluide cryogénique est destiné à être transporté par la conduite 18 entre l'ensemble amont 14 et l'ensemble aval 16. Un tel fluide est par exemple un hydrocarbure sous forme liquide, tel que du gaz naturel liquéfié. Le fluide cryogénique présente alors une température d'ébullition inférieure à - 163°C.

Plus généralement, un fluide cryogénique transporté à travers la conduite 18 présente une température d'ébullition inférieure à 0°C.

L'étendue d'eau 12 est par exemple un lac, une mer ou un océan. La profondeur de l'étendue d'eau 12, au droit de l'installation 10 est par exemple comprise entre 15 mètres et 4000 mètres.

L'ensemble amont 14 est par exemple une structure flottant sur l'étendue d'eau telle qu'un support naval de surface, une plate-forme semi-submersible, une colonne verticale flottante, ou un navire.

En variante, l'ensemble 14 est une structure rigide fixe de type « jacket », ou une structure oscillante assujettie au fond de la mer.

L'ensemble amont 14 comporte un réservoir amont 20 de réception du fluide cryogénique. Le réservoir amont 20 est raccordé à une extrémité amont de la conduite flexible 18 par l'intermédiaire d'un système de connexion (non représenté).

Dans une variante avantageuse, l'ensemble amont 14 comporte une unité de liquéfaction d'un gaz, pour former le fluide cryogénique. Ainsi, l'ensemble amont 14 peut être une unité flottante de récupération, de stockage et de traitement des hydrocarbures désignée par l'acronyme anglais « FPSO ». En variante, l'ensemble amont 14 est une unité flottante de stockage et de regazéification désignée par l'acronyme anglais « FSRU ».

Dans cet exemple, l'ensemble aval 16 est également une structure flottante.

Cet ensemble aval 16 est par exemple formé par un navire, une barge, une plate-forme flottante, destiné à être raccordée à l'ensemble amont de stockage 14 pour recueillir du fluide cryogénique provenant de l'ensemble amont 14.

L'ensemble aval comporte un réservoir aval 22 de fluide cryogénique raccordé à une extrémité aval de la conduite flexible 18, par un système de connexion (non représenté).

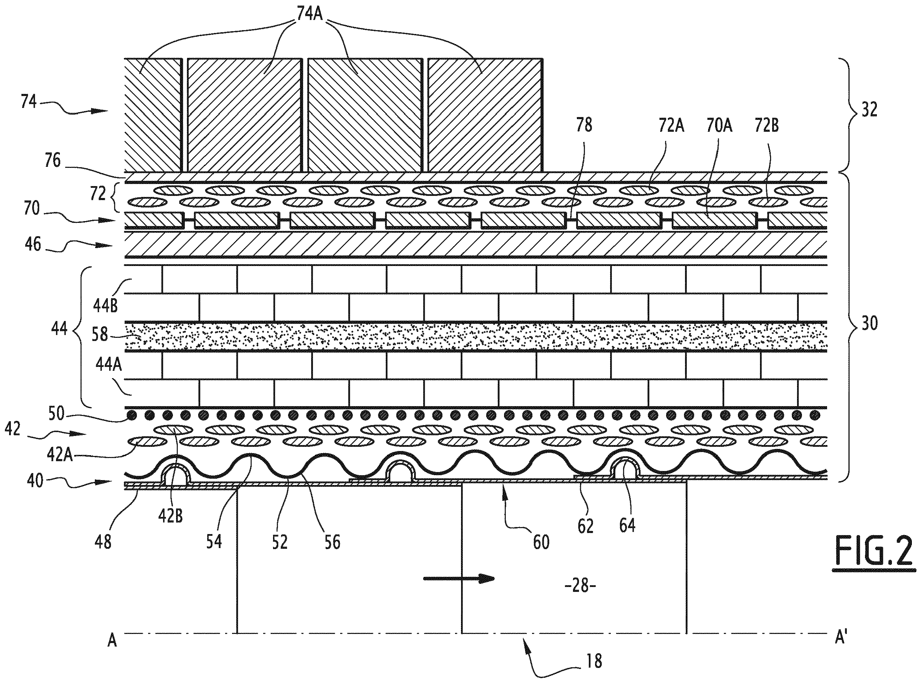

La conduite flexible 18 s'étend avantageusement sur une longueur supérieure à 30 mètres et comprise notamment entre 50 mètres et 300 mètres. Elle délimite un passage central 28 de circulation du fluide cryogénique, d'axe local A-A' sur la figure 2.

La conduite flexible 18 a un rayon minimal de courbure en flexion sans endommagement (« MBR » ou « minimal bending radius » en anglais) relativement petit, par exemple de quelques mètres. Ceci la rend propre à être enroulée et déroulée de manière réversible, sans déformation plastique significative sur un tambour ou un panier porté par un navire.

La conduite flexible 18 est avantageusement non liée. Les couches la composant ne sont pas liées entre elles par un matériau de liaison tel qu'un adhésif, mais sont libres de coulisser localement les unes par rapport aux autres, notamment lors d'une torsion.

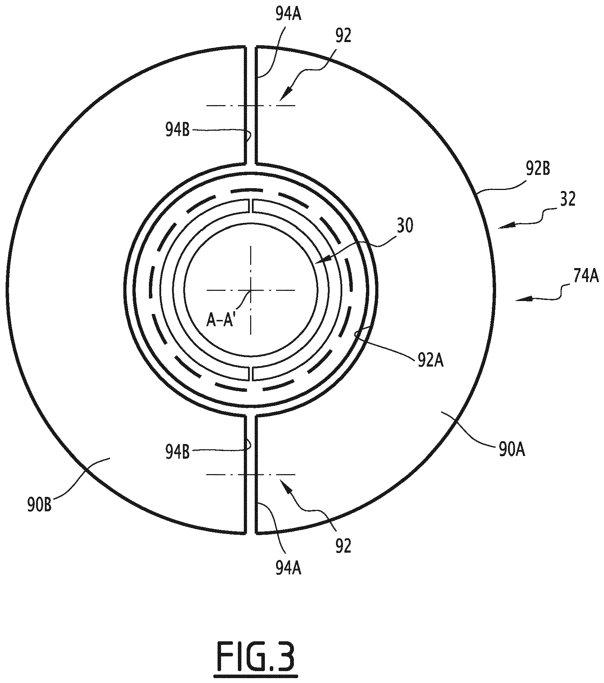

Comme illustré par les figures 2 et 3, la conduite flexible 18 comporte un ensemble intérieur 30 de confinement du fluide cryogénique, et un ensemble extérieur 32 de lest, disposé autour de l'ensemble de confinement 30, sur au moins une partie de la longueur de la conduite flexible 18.

Comme illustré par la figure 2, l'ensemble intérieur 30 comporte un tube intérieur ondulé 40, au moins une armure 42 interne de traction, et au moins un ensemble 44 d'isolation thermique, disposé autour de l'armure interne 42.

L'ensemble intérieur 30 comporte en outre une gaine intermédiaire 46 disposée autour de l'ensemble 44 d'isolation thermique.

La conduite 18 comporte optionnellement, dans l'exemple de la figure 2, une chemise 48 interne de guidage du fluide dans le tube ondulé 44 et une couche spiralée 50 disposée entre les couches d'armure 42 et les couches d'isolation 44.

Le tube interne ondulé 40 est formé à base de métal. Pour assurer une bonne tenue en température, à la température de circulation du fluide cryogénique, ce tube est par exemple réalisé en acier 304L ou 316L.

Le tube 40 présente avantageusement un diamètre moyen supérieur à 30 centimètres, par exemple compris entre 30 centimètres et 60 centimètres.

Il présente, en se déplaçant axialement parallèlement à l'axe A-A', une pluralité d'ondulations 52 de pas inférieur à au moins dix fois le diamètre moyen du tube.

Les ondulations 52 du tube 40 sont formées par une série de creux 54 et de bosses 56 délimitant axialement les creux 54.

Les creux 54 débouchent radialement vers l'axe A-A'. La profondeur radiale maximale des creux 54, prise perpendiculairement à l'axe A-A' entre le sommet d'une bosse 56 et le fond du creux 54, est inférieure à vingt fois le diamètre moyen du tube 40.

Dans l'exemple représenté sur la figure 1, les creux 54 forment une série de gorges annulaires disjointes parallèles les unes aux autres. En variante, les creux 54 sont formés par une gorge hélicoïdale continue de pas égal au pas des ondulations 52.

Le tube 40 est formé par exemple par assemblage bout à bout d'une pluralité de sections de tube ondulé, chaque section étant formée par exemple par emboutissage. Chaque section de tube ondulé comporte une pluralité d'ondulations, par exemple plus de dix ondulations 52. Chaque section de tube ondulé définit une surface intérieure continue et étanche sur toute sa longueur et sur toute sa périphérie.

Une fois assemblées entre elles par exemple par soudage, les sections de tube ondulé 40 forment un conduit étanche continu sur toute sa longueur.

En variante, le tube 40 est formé par enroulement d'un ruban replié suivant au moins un bord, pour s'agrafer sur un bord adjacent du ruban.

Le tube 40 offre ainsi une résistance à la pression interne, tout en garantissant une certaine flexibilité, par la déformation offerte par les ondulations 52 du tube 40, notamment aux basses températures d'utilisation.

L'armure de traction 42 est formée par au moins une couche 42A, 42B d'armure de traction enroulée hélicoïdalement autour de l'axe A-A'. Chaque couche d'armures 42A, 42B comporte des éléments allongés tels que des rubans, ou/et des fils, par exemple en matériau synthétique tel que du polyester, en matériau composite ou en métal.

Une première couche d'armures 42A est par exemple enroulée en hélice autour de l'axe A-A' avec un angle d'hélice +α compris entre 20 ° et 45° par rapport à l'axe A-A'. Une deuxième couche 42B d'armure est enroulée, par exemple avec un angle d'hélice -α à l'extérieur de la première couche 42A au contact de cette couche 42B.

L'armure interne de traction 42 présente avantageusement une épaisseur comprise entre 1 mm et 4 mm. L'armure de traction 42 n'est pas liée au tube ondulé 40.

La couche optionnelle spiralée 50 est enroulée autour de l'armure interne 42, avec un angle d'enroulement inférieur à celui des couches d'armure 42A, 42B. Ainsi, l'angle d'enroulement de la couche 50 est par exemple compris entre 2 ° et 5 °.

La couche spiralée 50 est réalisée à base d'un élément filiforme, par exemple à base de fibres de matière plastique telles que des fibres de polyester.

La couche spiralée 50 assure le renforcement des couches d'armures 42 et évite que la structure de ces couches 42 ne se désorganise lors de l'utilisation de la conduite 18 ou lors de sa flexion.

La couche spiralée 50 n'est pas liée aux couches d'armures 42.

Dans cet exemple, l'ensemble d'isolation 44 comporte au moins une couche d'isolation thermique 44A, 44B. Il présente avantageusement au moins deux couches d'isolation 44A, 44B analogues séparées par une couche intermédiaire d'étanchéité 58.

Chaque couche d'isolation thermique 44A, 44B est formée de matériau solide isolant thermiquement, présentant une conductivité thermique inférieure à au moins 300 fois la conductivité thermique du tube interne 40.

Chaque couche 44A, 44B est par exemple formée par une mousse, avantageusement une mousse de polyoléfine, ou par un aérogel.

Dans l'exemple représenté sur la Figure 1, chaque couche 44A, 44B d'isolation thermique est formée par exemple par un ou plusieurs rubans de mousse de polyéthylène enroulés autour de l'axe A-A'.

La couche intermédiaire d'étanchéité 58 est formée avantageusement d'une bande adhésive de mastic caoutchouc. Elle assure une étanchéité additionnelle au gaz naturel dans le cas où le tube interne 40 n'assure plus cette étanchéité.

L'ensemble d'isolation thermique 44 formé par la ou chaque couche d'isolation thermique 44A, 44B et par la couche intermédiaire 50, lorsqu'elle est présente, possède une épaisseur supérieure à l'épaisseur du tube interne 40, par exemple comprise entre 3 cm et 15 cm.

Son coefficient d'isolation thermique global assure que la température interne dans le passage 28 est conservée à une valeur inférieure ou sensiblement égale à la température d'ébullition du fluide cryogénique, tout en évitant la formation de glace à l'extérieur de la conduite 18.

Les couches d'isolation thermique 44A, 44B ne sont pas liées à la couche spiralée 50 ou à la gaine intermédiaire 46 ou à l'armure interne 42.

La gaine intermédiaire 46 est destinée à assurer une étanchéité générale entre l'extérieur de la conduite 18 et l'intérieur de la conduite 18, pour empêcher la pénétration d'eau dans l'ensemble interne 30. Elle est formée par exemple de bandes spiralées en PVC caoutchouc ou en aramide tel que du KEVLAR ou d'une gaine thermoplastique extrudée ou projetée.

Avantageusement, la gaine intermédiaire 46 comprend en outre une sous couche additionnelle d'isolant thermique.

La gaine intermédiaire 46 n'est pas liée aux couches d'isolation 44A, 44B.

La chemise interne 48, lorsqu'elle est présente, est par exemple formée par une série de segments cylindriques 60 engagés axialement les uns dans les autres à l'intérieur du tube ondulé 40. Elle est par exemple métallique.

La chemise interne 48 est de longueur totale sensiblement égale à la longueur totale du tube ondulé 16.

Chaque segment 60 est de forme générale cylindrique. Il comporte avantageusement un corps cylindrique 62 d'axe A-A' expansible radialement, et une butée 64 extérieure de calage axial sur le tube ondulé 16.

La structure de la gaine interne 48 est par exemple analogue à celle décrite dans la demande française WO2011/092440 de la Demanderesse et ne sera pas décrite plus en détail.

Comme illustré par les Figures 2 et 3, l'ensemble de lest 32 comporte une couche de support 70 destinée à s'appuyer sur l'ensemble interne 30, une armure externe 72 enroulée autour de la couche de support 70 et une couche extérieure 74 d'anneaux de lest 74A adjacents.

L'ensemble de lest 32 comporte avantageusement une gaine externe 76 en matériau polymère interposée entre l'armure externe 72 et la couche extérieure 74.

La couche de support 70 est formée d'une pluralité de colliers adjacents 70A montés autour de la gaine intermédiaire 46.

Les colliers 70A sont montés longitudinalement les uns à côté des autres autour de la gaine intermédiaire 46.

Un espace intermédiaire 78 sépare les colliers 70A de chaque paire de colliers 70A adjacents. Ainsi, les colliers 70A successifs sont disjoints et ne sont pas directement raccordés les uns aux autres.

Avantageusement, la longueur des colliers 70A est comprise entre 100 mm et 200 mm, avantageusement égale à 150 mm. Les colliers 70A sont disposés suivant un pas compris entre 200 mm et 300 mm, notamment autour de 250 mm.

Les colliers 70A sont tous engagés autour de la gaine intermédiaire 46 sans être fixés à la gaine 46. Ceci évite d'endommager la gaine 46 ou une couche d'isolation 44A, 44B.

Avantageusement, comme illustré par la Figure 3, chaque collier 70A est formé d'une pluralité de parties circonférentielles de collier 80A, 80B, chaque partie circonférentielle 80A, 80B s'étendant dans un secteur angulaire inférieur ou égal à 180° autour de l'axe A-A'.

Dans l'exemple représenté sur la Figure 2, chaque collier 70A est formé de deux demi-colliers assemblés entre eux par pointage

Ainsi, chaque partie circonférentielle 80A, 80B présente une forme de portion de cylindre. Lorsque les parties circonférentielles 80A, 80B sont assemblées l'une sur l'autre, elles forment ainsi un cylindre 70A continu autour de l'axe A-A'.

Chaque collier 70A est par exemple réalisé en métal, notamment en acier. Il présente avantageusement une épaisseur comprise entre 2 mm et 10 mm, notamment entre 4 mm et 5 mm.

L'armure externe 72 comporte au moins une couche d'armures externes 72A, 72B, avantageusement deux couches d'armures externes 72A, 72B croisées.

Chaque couche d'armure externe 72A, 72B est formée avantageusement par un enroulement hélicoïdal d'un élément allongé, telle qu'une bande en matériau composite comme du Kevlar.

Une première couche d'armures 72A est par exemple enroulée en hélice autour de l'axe A-A' avec un angle d'hélice +ß compris entre 5° et 50° par rapport à l'axe A-A'. Une deuxième couche d'armures 72B est enroulée par exemple avec un angle d'hélice -ß à l'extérieur de la première couche d'armures 72A, au contact de cette couche d'armures 72A.

Le nombre de couches d'armure 72A, 72B est compris généralement entre 1 et 4.

Chaque couche d'armures 72A, 72B est destinée à transmettre les tensions liées à la masse ajoutée par les anneaux de lest 74A jusqu'aux extrémités de la conduite 18.

La gaine externe 76 est formée par exemple d'une couche de matériau polymère tel qu'un polyamide, notamment un PA11, ou une polyoléfine, tel que du polyéthylène. En variante, la gaine externe 76 est formée d'un polymère fluoré, tel que du polyfluorure de vinylidène.

Elle est disposée à l'extérieur des couches d'armure 72A, 72B.

La couche de support 70, l'armure externe 72 et la gaine externe 76 s'étendent continûment sur la conduite 18, avantageusement sur toute la longueur de la conduite 18, ou au moins continûment entre deux embouts de chaque section de conduite.

Comme illustré par la Figure 3, les anneaux de lest 74A de la couche extérieure 74 sont montés autour de la gaine externe 76. Ils sont formés avantageusement de métal pour fournir le poids nécessaire à l'ajustement local de la flottabilité de la conduite 18.

Avantageusement, chaque anneau de lest 74A est formé d'une pluralité de segments 90A, 90B répartis angulairement à la périphérie de la conduite 18 par rapport à l'axe A-A'.

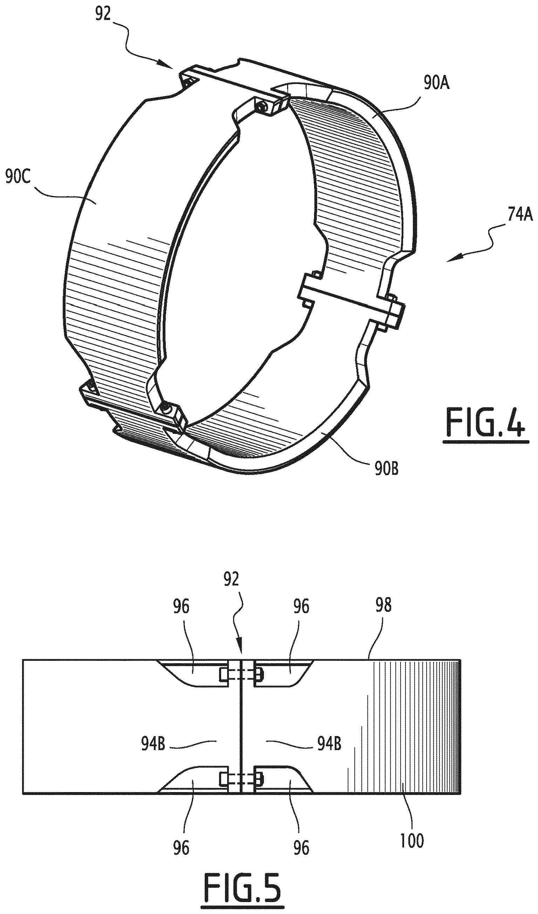

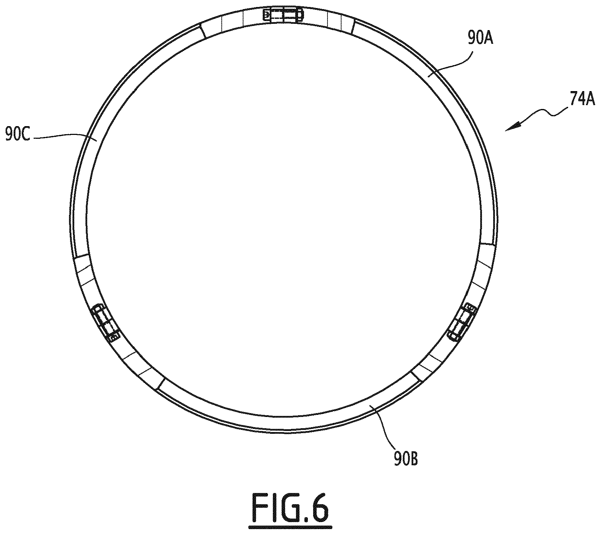

Dans l'exemple représenté sur la Figure 3, l'anneau 74A comporte deux segments 90A, 90B raccordés entre eux par un mécanisme de fixation 92. Dans la variante représentée sur les Figures 4 à 6, l'anneau 74A comporte plus de deux segments, avantageusement trois segments 90A, 90B, 90C raccordés entre eux par le mécanisme de fixation 92.

L'anneau 74A présente une densité supérieure à 1 pour réduire la flottabilité locale de la conduite 18 dans l'étendue d'eau 12.

La masse linéique de la couche extérieure 74 sur les tronçons de la conduite 18 munis d'anneaux 74A est par exemple comprise entre 100 kg/m et 500 kg/m, pour atteindre une masse typique par exemple de 50 tonnes sur 200 m.

Les segments 90A, 90B s'étendent circonférentiellement autour de l'axe A-A'. Ils présentent une surface interne 92A en forme de tronçon de cylindre destinée à s'appliquer sur la gaine externe 76 et une surface externe 92B avantageusement en forme de tronçon de cylindre.

L'épaisseur de l'anneau 74A, prise entre la surface interne 92A et la surface externe 92B est avantageusement supérieure à l'épaisseur de chaque collier 70A prise radialement par rapport à l'axe A-A'.

Chaque segment 90A présente une première région d'accostage 94A sur un segment adjacent 90B et une deuxième région d'accostage 94B sur un segment adjacent 90B.

Les régions d'accostage 94A, 94B sont formées avantageusement sur les bords circonférentiels de chaque segment 90A, 90B, sensiblement dans un plan radial par rapport à l'axe A-A'. Chaque région d'accostage 94A d'un premier segment 90A est destinée à s'appliquer sur une région d'accostage 94B d'un deuxième segment 90B.

Le mécanisme de fixation 92 est interposé entre chaque premier segment 90A et chaque deuxième segment adjacent 90B. Il est propre à maintenir chaque surface d'accostage 94A d'un premier segment 90A en position par rapport à la surface d'accostage 94B d'un deuxième segment 90B.

Dans un exemple avantageux, le mécanisme de fixation 92 est formé par au moins un système vis/écrou engagé à travers chaque paire de segment 90A, 90B.

Ainsi, les anneaux 74A sont facilement montables et démontables autour de la gaine externe 76. Ce montage peut être effectué lors de l'installation de la conduite 18 dans l'étendue d'eau, après sa fabrication, pour ajuster la configuration et la flottabilité locale de la conduite 18.

Dans la variante illustrée par les Figures 4 et 5, chaque région d'accostage 94A, 94B présente sensiblement une forme de T. Chaque segment délimite, au voisinage de la région d'accostage des échancrures longitudinales 96 débouchant respectivement dans un bord amont 98 et dans un bord aval 100 de l'anneau 74A.

Les organes de fixation 92 font saillie à travers les extrémités libres des régions d'accostage 94A, 94B situées en regard des échancrures 96, ce qui permet l'introduction, le montage et le démontage aisé du mécanisme de fixation.

Dans une configuration avantageuse représentée sur la Figure 1, la conduite 18 comporte au moins un tronçon central 110 dépourvu d'anneaux de lest 74A, et deux tronçons adjacents 112A, 112B situés de part et d'autre du tronçon central 110, munis d'anneaux de lest 74A.

Ainsi, lorsque la conduite 18 est immergée dans l'étendue d'eau, le tronçon central 110 flotte à la surface de l'étendue d'eau 12 ou reste au voisinage de celle-ci, alors que les tronçons adjacents 112A, 112B présentent une flottabilité inférieure à celle du tronçon central 110 et sont donc immergés sous l'étendue d'eau 12 en dessous du tronçon central 110.

La conduite 18 présente ainsi une configuration en forme de W lorsqu'elle est immergée dans l'étendue d'eau 12.

Un procédé de fabrication de la conduite flexible 10 selon l'invention va maintenant être décrit. Initialement, le tube intérieur ondulé 40 est fourni.

Si le tube ondulé 40 est formé d'une pluralité de tronçons, les différents tronçons de tube sont assemblés entre eux.

Avantageusement, dans le cas où une chemise interne 48 est prévue dans le tube 40, cette chemise interne 48 est assemblée à l'intérieur du tube 40.

Les armures internes 42 sont ensuite enroulées autour du tube interne 40. Puis, la couche spiralée 50, lorsqu'elle est présente est enroulée en spirale autour des couches d'armure 42.

Ensuite, la première couche d'isolation 44A, la couche intermédiaire 58 lorsqu'elle est présente, puis la deuxième couche d'isolation 44B sont disposées autour de l'armure 42. Enfin, la couche externe d'étanchéité est placée autour de l'ensemble d'isolation 44.

Une fois l'ensemble interne 30 monté, les colliers 70A sont assemblés autour de la gaine intermédiaire 46. Une couche de support 70 comportant des colliers disjoints 70A est ainsi formée autour de la gaine intermédiaire 48 et est maintenue en position autour de cette gaine.

Les différentes parties circonférentielles de chaque collier 70A sont montées l'une sur l'autre, avantageusement par pointage.

Puis, les couches d'armure externe 72A, 72B sont enroulées autour des colliers 70, de manière connue. La couche externe 76 est ensuite disposée autour de l'armure externe 72 ainsi formée.

Dans une première variante, la conduite 18 totalement dépourvue d'anneaux 74A est enroulée autour d'un tambour ou d'un panier porté par une structure de pose.

Puis, lors de la pose de la conduite 18, les anneaux de lest 74A sont montés autour de la gaine externe 76.

A cet effet, les différents segments 90A, 90B, 90C sont assemblés entre eux par les mécanismes de fixation 92 dans les tronçons 112A, 112B qui sont destinés à être munis d'anneaux de lest 74A. La conduite 18 est ensuite déroulée progressivement et est raccordée sur l'ensemble amont 14 et sur l'ensemble aval 16.

En variante, les anneaux de lest 74A sont montés sur la conduite 18, avant d'être chargés sur la structure de pose.

Grâce à l'invention qui vient d'être décrite, il est possible de disposer d'une conduite flexible 18 de transport d'un fluide cryogénique susceptible d'être immergée dans l'étendue d'eau 12, tout en garantissant l'intégrité mécanique de la conduite 18, et notamment des couches d'isolation thermique 44A, 44B.

La conduite 18 selon l'invention est de structure particulièrement simple. La présence d'anneaux de lest 74 montés sur différents tronçons 112A, 112B de la conduite 18 permet d'ajuster localement sa flottabilité pour obtenir différentes configurations de pose.

Dans une variante, au moins un ensemble parmi l'ensemble amont 14 et de l'ensemble aval 16 est immergé sous l'étendue d'eau.

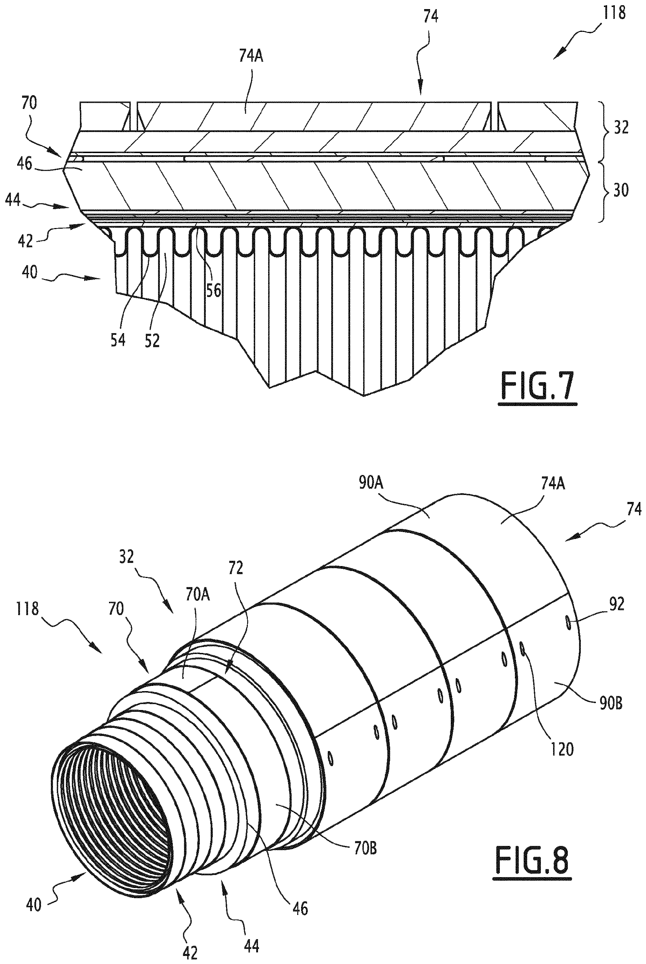

Une deuxième conduite 118 selon l'invention est illustrée sur les Figures 7 et 8. A la différence de la conduite 18, cette conduite 18 est dépourvue de gaine interne 48 et de couche spiralée 50. De plus, chaque segment 90A, 90B présente un bord amont 98 et un bord aval 100 dépourvus d'échancrures.

Des perçages 120 sont ménagés dans chaque segment pour permettre l'introduction du mécanisme de blocage 92.

## Revendications

1. Conduite flexible (18 ; 118) de transport d'un fluide cryogénique, comprenant un ensemble intérieur (30) de confinement du fluide comportant :
• un tube intérieur (40) ondulé présentant un axe (A-A'), le tube ondulé (40) définissant un passage étanche (28) de circulation du fluide cryogénique ;
• une armure de traction (42), disposée autour du tube intérieur (40) ;
• un ensemble (44) d'isolation thermique disposé autour de l'armure de traction (42),
la conduite (18 ; 118) comportant un ensemble de lest (32), monté autour de l'ensemble intérieur (30) ;
**caractérisée en ce que** l'ensemble de lest (32) comporte :
- une pluralité de colliers (70A), montés extérieurement sur l'ensemble intérieur (30) pour former une couche de support (70) ;
- au moins une armure externe (72) ;
- au moins un anneau de lest (74A) engagé autour de l'armure externe (72).

2. Conduite (18 ; 118) selon la revendication 1, **caractérisée en ce que** l'ensemble de lest (32) comporte une gaine externe (76) en matériau polymère insérée entre l'armure externe (72) et la couche de support (70).

3. Conduite (18 ; 118) selon l'une quelconque des revendications précédentes, **caractérisée en ce que** l'ensemble intérieur (30) comporte une gaine intermédiaire (46) disposée autour de l'ensemble d'isolation thermique (44), la couche de support (70) s'appuyant sur la gaine intermédiaire (46).

4. Conduite (18 ; 118) selon l'une quelconque des revendications précédentes, **caractérisée en ce que** chaque collier (70A) comporte au moins deux parties circonférentielles (80A, 80B) de collier fixées l'une sur l'autre.

5. Conduite (18 ; 118) selon la revendication 4, **caractérisée en ce que** les parties circonférentielles (80A, 80B) sont fixées l'une sur l'autre par pointage.

6. Conduite (18 ; 118) selon l'une quelconque des revendications précédentes, **caractérisée en ce que** chaque anneau de lest (70A) est formé d'une pluralité de segments (90A, 90B) assemblés les uns sur les autres.

7. Conduite (18 ; 118) selon la revendication 6, **caractérisée en ce que** chaque segment (90A, 90B) comporte une région d'accostage (94A, 94B) sur un segment adjacent (90B, 90A), la région d'accostage (94A, 94B) présentant avantageusement une forme de T, l'anneau de lest (74A) comprenant un mécanisme de fixation (92) inséré à travers les régions d'accostage (94A, 94B) adjacentes.

8. Conduite (18 ; 118) selon l'une quelconque des revendications précédentes, **caractérisée en ce qu'**au moins un tronçon (112A, 112B) de la conduite flexible est muni d'anneaux de lest (74A), au moins un deuxième tronçon (110) de la conduite (18) étant dépourvu d'anneau de lest (74A).

9. Conduite (18 ; 118) selon l'une quelconque des revendications précédentes, **caractérisée en ce que** l'ensemble d'isolation thermique (44) comporte au moins une couche d'isolation thermique (44A) formée par un aérogel.

10. Installation (10) de transfert d'un fluide cryogénique comportant :
- un premier ensemble (14), avantageusement flottant, de réception du fluide ;
- un deuxième ensemble (16), avantageusement flottant, de réception du fluide ;
- une conduite flexible (18; 118) selon l'une quelconque des revendications précédentes, disposée entre le premier ensemble (14) et le deuxième ensemble (16), une première extrémité de la conduite flexible (18) étant montée sur le premier ensemble (14), une deuxième extrémité de la conduite flexible (18) étant montée sur le deuxième ensemble (16).

11. Installation (10) selon la revendication 10, **caractérisée en ce que** la conduite flexible (18 ; 118) comporte un tronçon central (110) dépourvu d'anneau de lest (74A), et deux tronçons adjacents (112A, 112B) entourant le tronçon central (110), chaque tronçon adjacent (112A, 112B) étant muni d'au moins un anneau de lest (74A), la conduite adoptant une configuration en W lorsqu'elle est immergée dans l'étendue d'eau (12).

12. Procédé de fabrication d'une conduite flexible (18; 118) selon l'une quelconque des revendications 1 à 9, **caractérisé en ce qu'**il comporte les étapes suivantes :
- fourniture d'un tube intérieur ondulé (40) d'axe longitudinal (A-A') définissant un passage étanche (28) de circulation du fluide cryogénique ;
- disposition d'une armure de traction (42) interne autour du tube ondulé (40) ;
- placement d'un ensemble (44) d'isolation thermique autour de l'armure de traction (42) ;
- montage d'un élément de lest (30) sur l'ensemble ;
**caractérisé en ce que** le montage de l'élément de lest (30) comprend les phases suivantes :
- montage d'une pluralité de colliers (70A) extérieurement sur l'ensemble intérieur (30) pour former une couche de support (70) ;
- disposition d'une armure externe (72) autour de la couche de support (70) ;
- assemblage d'au moins un anneau de lest (74A) autour de l'armure externe (72).

## Patentansprüche

1. Flexible Leitung (18; 118) zum Transport eines kryogenen Fluids, umfassend eine innere Einheit (30) zum Einschließen des Fluids mit:
• einem gewellten Innenrohr (40), das eine Achse (A-A') aufweist, wobei das gewellte Rohr (40) einen dichten Durchgang (28) zum Umlauf des kryogenen Fluids definiert;
• eine Zugarmierung (42), die um das Innenrohr (40) herum angeordnet ist;
• eine Wärmeisolationseinheit (44), die um die Zugarmierung (42) herum angeordnet ist,
wobei die Leitung (18; 118) eine Ballasteinheit (32) umfasst, die um die innere Einheit (30) herum montiert ist;
**dadurch gekennzeichnet, dass** die Ballasteinheit (32) umfasst:
- mehrere Ansätze (70A), die außen an der inneren Einheit (30) montiert sind, um eine Trägerschicht (70) zu bilden;
- mindestens eine äußere Armierung (72);
- mindestens einen Ballastring (74A), der um die äußere Armierung (72) herum angreift.

2. Leitung (18; 118) nach Anspruch 1, **dadurch gekennzeichnet, dass** die Ballasteinheit (32) eine äußere Hülle (76) aus Polymermaterial umfasst, die zwischen der äußeren Armierung (72) und der Trägerschicht (70) eingesetzt ist.

3. Leitung (18; 118) nach einem der vorhergehenden Ansprüche, **dadurch gekennzeichnet, dass** die innere Einheit (30) eine Zwischenhülle (46) umfasst, die um die Wärmeisolationseinheit (44) herum angeordnet ist, wobei die Trägerschicht (70) sich an der Zwischenhülle (46) abstützt.

4. Leitung (18; 118) nach einem der vorhergehenden Ansprüche, **dadurch gekennzeichnet, dass** jeder Ansatz (70A) mindestens zwei aneinander befestigte umfängliche Ansatzteile (80A, 80B) umfasst.

5. Leitung (18; 118) nach Anspruch 4, **dadurch gekennzeichnet, dass** die umfänglichen Teile (80A, 80B) durch Punktschweißen aneinander befestigt sind.

6. Leitung (18; 118) nach einem der vorhergehenden Ansprüche, **dadurch gekennzeichnet, dass** jeder Ballastring (70A) aus mehreren aneinander gesetzten Segmenten (90A, 90B) besteht.

7. Leitung (18; 118) nach Anspruch 6, **dadurch gekennzeichnet, dass** jedes Segment (90A, 90B) einen Ankopplungsbereich (94A, 94B) zum Ankoppeln an ein benachbartes Segment (90B, 90A) umfasst, wobei der Ankopplungsbereich (94A, 94B) vorteilhafter Weise eine T-Form aufweist, wobei der Ballastring (74A) einen Befestigungsmechanismus (92) umfasst, der durch benachbarte Ankopplungsbereiche (94A, 94B) eingesetzt ist.

8. Leitung (18; 118) nach einem der vorhergehenden Ansprüche, **dadurch gekennzeichnet, dass** mindestens ein Abschnitt (112A, 112B) der flexiblen Leitung mit dem Ballastring (74A) versehen ist, wobei mindestens ein zweiter Abschnitt (110) der Leitung (18) frei von dem Ballastring (74A) ist.

9. Leitung (18; 118) nach einem der vorhergehenden Ansprüche, **dadurch gekennzeichnet, dass** die Wärmeisolationseinheit (44) mindestens eine Wärmeisolationsschicht (44A) umfasst, die aus einem Aerogel besteht.

10. Anlage (10) zur Überführung eines kryogenen Fluids, Folgendes umfassend:
- eine vorteilhafter Weise schwimmende erste Einheit (14) zur Aufnahme des Fluids,
- eine vorteilhafter Weise schwimmende zweite Einheit (16) zur Aufnahme des Fluids,
- eine flexible Leitung (18; 118) nach einem der vorhergehenden Ansprüche, die zwischen der ersten Einheit (14) und der zweiten Einheit (16) angeordnet ist, wobei ein erstes Ende der flexiblen Leitung (18) an der ersten Einheit (14) montiert ist, wobei ein zweites Ende der flexiblen Leitung (18) an der zweiten Einheit (16) montiert ist.

11. Anlage (10) nach Anspruch 10, **dadurch gekennzeichnet, dass** die flexible Leitung (18; 118) einen zentralen Abschnitt (110), der frei von dem Ballastring (74A) ist, und zwei Nachbarabschnitte (112A, 112B) umfasst, die den zentralen Abschnitt (110) umgeben, wobei jeder Nachbarabschnitt (112A, 112B) mit mindestens einem Ballastring (74A) versehen ist, wobei die Leitung eine W-Form annimmt, wenn sie in offenes Wasser (12) eingetaucht ist.

12. Verfahren zur Herstellung einer flexiblen Leitung (18; 118) nach einem der Ansprüche 1 bis 9, **dadurch gekennzeichnet, dass** es die folgenden Schritte umfasst:
- Bereitstellen eines gewellten Innenrohrs (40) mit einer Längsachse (A-A'), das einen dichten Durchgang (28) zum Umlauf des kryogenen Fluids definiert;
- Anordnen einer inneren Zugarmierung (42) um das gewellte Rohr (40) herum;
- Einsetzen einer Wärmeisolationseinheit (44) um die Zugarmierung (42) herum;
- Montieren eines Ballastelements (30) an der Einheit;
**dadurch gekennzeichnet, dass** die Montage des Ballastelements (30) die folgenden Phasen umfasst:
- Montieren mehrerer Ansätze (70A) außen an der inneren Einheit (30), um eine Trägerschicht (70) zu bilden;
- Anordnen einer äußeren Armierung (72) um die Trägerschicht (70) herum;
- Ansetzen mindestens eines Ballastrings (74A) um die äußere Armierung (72) herum.

## Claims

1. A flexible pipe (18; 118) for transporting a cryogenic fluid, having an inner fluid confinement assembly (30) comprising:
• an inner corrugated tube (40) having an axis (A-A'), the corrugated tube (40) defining a sealed throughway (28) for circulation of the cryogenic fluid;
• a tensile armour (42) arranged around the inner tube (40);
• a heat-insulating assembly (44) arranged around the tensile armour (42),
the pipe (18; 118) comprising a ballast assembly (32), mounted around the inner assembly (30);
**characterized in that** the ballast assembly (32) comprises:
- a plurality of collars (70A), mounted externally on the inner assembly (30) to form a support layer (70);
- at least one outer armour (72);
- at least one ballast ring (74A) engaged around the outer armour (72).

2. The pipe (18; 118) according to claim 1, **characterized in that** the ballast assembly (32) comprises an outer sheath (76) in polymer material inserted between the outer armour (72) and the support layer (70).

3. The pipe (18; 118) according to any of the preceding claims, **characterized in that** the inner assembly (30) comprises an intermediate sheath (46) arranged around the heatinsulating assembly (44), the support layer (70) bearing upon the intermediate sheath (46).

4. The pipe (18; 118) according to any of the preceding claims, **characterized in that** each collar (70A) comprises at least two circumferential collar parts (80A, 80B) secured to one another.

5. The pipe (18; 118) according to claim 4, **characterized in that** the circumferential parts (80A, 80B) are secured to one another by tack welding.

6. The pipe (18; 118) according to any of the preceding claims, **characterized in that** each ballast ring (70A) is formed of a plurality of segments (90A, 90B) assembled together.

7. The pipe (18; 118) according to claim 6, **characterized in that** each segment (90A, 90B) comprises a docking region (94A, 94B) on an adjacent segment (90B, 90A), the docking region (94A, 94B) advantageously being T-shaped, the ballast ring (74A) comprising a securing mechanism (92) inserted through adjacent docking regions (94A, 94B).

8. The pipe (18 ; 118) according to any of the preceding claims, **characterized in that** at least one section (112A, 112B) of the flexible pipe is provided with ballast rings (74A), at least one second section (110) of the pipe (18) being devoid of a ballast ring (74A).

9. The pipe (18; 118) according to any of the preceding claims, **characterized in that** the heat-insulating assembly (44) comprises at least one heat-insulating layer (44A) formed by an aerogel.

10. An installation (10) for transferring cryogenic fluid comprising:
- a first, advantageously floating, unit (14) to receive the fluid;
- a second, advantageously floating, unit (16) to receive the fluid;
- a flexible pipe (18; 118) according to one of the preceding claims arranged between the first unit (14) and the second unit (16), a first end of the flexible pipe (18) being mounted on the first unit (14), a second end of the flexible pipe (18) being mounted on the second unit (16).

11. The installation (10) according to claim 10, **characterized in that** the flexible pipe (18; 118) comprises a central section (110) devoid of ballast ring (74A), and two adjacent sections (112A, 112B) surrounding the central section (110), each adjacent section (112A, 112B) being provided with at least one ballast ring (74A), the pipe assuming a W-shaped configuration when immersed in the body of water (12).

12. A method for manufacturing a flexible pipe (18; 118) according to any of claims 1 to 9, **characterized in that** it comprises the following steps of :
- providing a corrugated inner tube (40) of longitudinal axis (A-A') defining a sealed throughway (28) for circulation of the cryogenic fluid;
- arranging an inner tensile armour (42) around the corrugated tube (40);
- placing a heat-insulating assembly (44) around the tensile armour (42);
- mounting a ballast element (30) on the assembly;
**characterized in that** the mounting of the ballast element (30) comprises the following phases:
- mounting a plurality of collars (70A) externally over the inner assembly (30) to form a support layer (70);
- arranging an outer armour (72) around the support layer (70);
- assembling at least one ballast ring (74A) around the outer armour (72).
